# EUROPÄISCHE PATENTSCHRIFT

(11) **EP 1 187 738 B1**
(45) Veröffentlichungstag und Bekanntmachung des Hinweises auf die Patenterteilung: **07.09.2005**
(21) Anmeldenummer: 01927884.5
(22) Anmeldetag: 06.04.2001
(51) Int. Cl.: B60N 2/36, B60N 2/235

(54) **GELENKBESCHLAG FÜR EINEN FAHRZEUGSITZ**
HINGED FITTING FOR A VEHICLE SEAT
GARNITURE DE JOINT ARTICULE POUR SIEGE DE VEHICULE

(30) Priorität: 12.04.2000 DE 10018125
(43) Veröffentlichungstag der Anmeldung: 20.03.2002
(73) Patentinhaber: KEIPER GmbH & Co. KG, 67657 Kaiserslautern (DE)
(72) Erfinder: HÄNSEL, Richard, 55237 Flonheim (DE); BOLTZE, Wolfgang, 67633 Kaiserslautern (DE); NOCK, Eckhard, 67551 Worms (DE); KLEIN, Mario, 67663 Kaiserslautern (DE)
(74) Vertreter: Patentanwälte Hosenthien-Held und Dr. Held
(86) Internationale Anmeldenummer: PCT/EP2001/003938
(87) Internationale Veröffentlichungsnummer: WO 2001/076907

(56) Entgegenhaltungen:
- EP-A- 0 738 624
- EP-A- 0 776 781
- US-A- 5 540 117
- US-B1- 6 209 955

## Beschreibung

Die Erfindung betrifft einen Gelenkbeschlag für einen Fahrzeugsitz mit den Merkmalen des Oberbegriffs des Anspruches 1 und einen Fahrzeugsitz mit den Merkmalen des Oberbegriffs des Anspruches 10.

Mit einem aus der EP 0 738 624 A1 bekannten Gelenkbeschlag dieser Art ist die Rückenlehne eines Fahrzeugsitzes im Fond eines Kraftfahrzeuges zur Benutzung durch Personen in einer aufrechten Sitzstellung verriegelbar. Zur Vergrößerung der Ladefläche ist die Rückenlehne nach vorne in eine flache Tischstellung und in einem weiteren Schritt der gesamte Fahrzeugsitz in eine Packagestellung schwenkbar. Der von der Sperrklinke unabhängig schwenkbare Steuerzahn blockiert bei der Rückkehr aus der Packagestellung die nach vorne geschwenkte Rückenlehne mittels einer Steuerkurve so lange, bis der Fahrzeugsitz mittels der (hinteren) Bodenverriegelung mit der Fahrzeugstruktur sicher verbunden ist und der Steuerzahn zurückgezogen wird.

Der Erfindung liegt die Aufgabe zu Grunde, einen Gelenkbeschlag der eingangs genannten Art zu verbessern. Diese Aufgabe wird erfindungsgemäß durch einen Gelenkbeschlag mit den Merkmalen des Anspruches 1 gelöst. Vorteilhafte Ausgestaltungen sind Gegenstand der Unteransprüche. Ein Fahrzeugsitz mit einem solchen Gelenkbeschlag ist Gegenstand des Anspruches 10.

Durch das Zusammenwirken der Steuerkurve des einen Beschlagteils mit dem Steuerelement des anderen Beschlagteiles zusammenwirkt, kann die Verriegelung und/oder Sicherung durch den Gelenkbeschlag gesteuert werden. In Abhängigkeit der Schwenkbewegung der Rückenlehne, welche bestimmten Abschnitten der Steuerkurve entspricht, kann in bestimmten Winkelbereichen eine ungehinderte, funktionssichere Verriegelung des Gelenkbeschlags mittels der Sperrklinke, auch bei größeren Toleranzen der steuernden Bauteile, erfolgen, nämlich wenn sich das als Steuerzahn ausgebildete Steuerelement in den Sitzstellungen im Einfallabschnitt befindet, ohne in Anlage an die Steuerkurve zu sein, während in anderen Winkelbereichen eine Sicherung und in weiteren Winkelbereichen ein ungehindertes Schwenken der Rückenlehne ohne Verriegeln erfolgen kann, wobei letzteres vorzugsweise bei Anlage des Steuerzahnes an die Steuerkurve in einem Halteabschnitt der Fall ist.

Als Anschläge ausgebildete Begrenzungen der verschiedenen Winkelbereiche können ein ungewolltes Weiter- oder Zurückschwenken verhindern. Mit dem erfindungsgemäßen Gelenkbeschlag verringert sich der Bauraum, welcher für den Einbau notwendig ist.

Die Sicherung der Tischstellung mittels des Gelenkbeschlags verhindert ein ungewolltes Zurückschwenken der Rückenlehne, beispielsweise aufgrund der Polsterpressung, was die transportierte Ladung schützt. Die Sicherung soll so zu verstehen sein, daß wenigstens eine rückwärts gerichtete Schwenkbewegung verhindert wird, beispielsweise durch einen Anschlag oder ein Sperren des Gelenkbeschlags. Dabei kann aber ein gewisses Spiel vorhanden sein. Das gleiche gilt für eine flache oder schräge Liegestellung, in welcher die Sicherung ein Schwenken nach unten verhindern soll. Die Sicherung kann beispielsweise auch so ausgebildet sein, daß sie ein Schwenken der Rückenlehne nach vorne aufgrund eines Crashs verhindert, um den Benutzer zu schützen.

In einer bevorzugten, konstruktiv einfach und kostengünstig herzustellende Ausführungsform ist die Steuerkurve auf einer Steuerscheibe vorgesehen, welche konzentrisch zur Drehachse des Beschlagoberteils angeordnet ist. Die Steuerscheibe kann an einem Beschlagteil, vorzugsweise dem Beschlagoberteil, einstückig ausgebildet sein oder aufgesetzt und befestigt sein. Durch Austausch der Steuerscheibe bei ansonsten unveränderten oder nahezu unveränderten Bauteilen kann der Gelenkbeschlag für unterschiedliche Einsatzzwecke angepaßt werden. Dadurch vereinfacht sich die Herstellung des Gelenkbeschlags und wird kostengünstiger.

Die Sperrklinke ist vorzugsweise am Beschlagunterteil gelagert und verriegelt das Beschlagoberteil. Der Steuerzahn kann beispielsweise einstückig mit Sperrklinke ausgebildet sein oder an einer gesondert ausgebildeten Steuerklinke vorgesehen sein, welche mit der Sperrklinke vorzugsweise fest verbunden ist. Für letztere Variante vereinfacht und verbilligt sich die Herstellung.

Zur Beseitigung eines toleranzbedingten Spieles in den Lagerstellen, welches zu einem unerwünschten Klappern führen kann, ist in einer bevorzugten Ausführungsform die den Gelenkbeschlag verriegelnde Sperrklinke mittels eines beweglich gelagerten Spannstückes gesichert, dessen ausgeübte Kraft eine Richtung aufweist, die an der Drehachse des Beschlagoberteils vorbei weist. Das sichernde Spannstück übt dann eine zusätzliche Kraftkomponente auf die Sperrklinke aus, welche deren Lagerspiel beseitigt. Die gewünschte Kraftrichtung kann durch entsprechend orientierte Anlageflächen erreicht werden.

Im Crashfall wird die den Gelenkbeschlag verriegelnde Sperrklinke vorzugsweise durch Formschluß mittels eines beweglich gelagerten Fangstücks in Eingriff mit einer Verzahnung des zu verriegelnden Beschlagteiles gehalten. Eine Möglichkeit zur Verringerung des Überdeckungsverlustes der verriegelnden Verzahnungen besteht darin, daß dieses Fangstück exzentrisch gelagert ist, beispielsweise aufgrund eines entsprechend ausgebildeten Lagerbolzens. An der exzentrischen Lagerung des Fangstücks sind vorzugsweise Drehhilfsmittel vorgesehen, um die Ausrichtung der Exzentrizität relativ zur Sperrklinke einzustellen. Der Überdeckungsverlust kann dann unabhängig von fertigungsbedingten Toleranzen verringert werden.

Der erfindungsgemäße Gelenkbeschlag findet vorzugsweise bei einem Fahrzeugsitz Anwendung, insbesondere bei einer Rücksitzbank im Fond eines Kraftfahrzeuges, beispielsweise eines sogenannten Vans, könnte aber auch bei einem Beifahrersitz eingesetzt werden. Der Gelenkbeschlag kann die Steuerkurve und die verschiedenen spielfreistellenden Mittel einzeln oder in Kombination aufweisen.

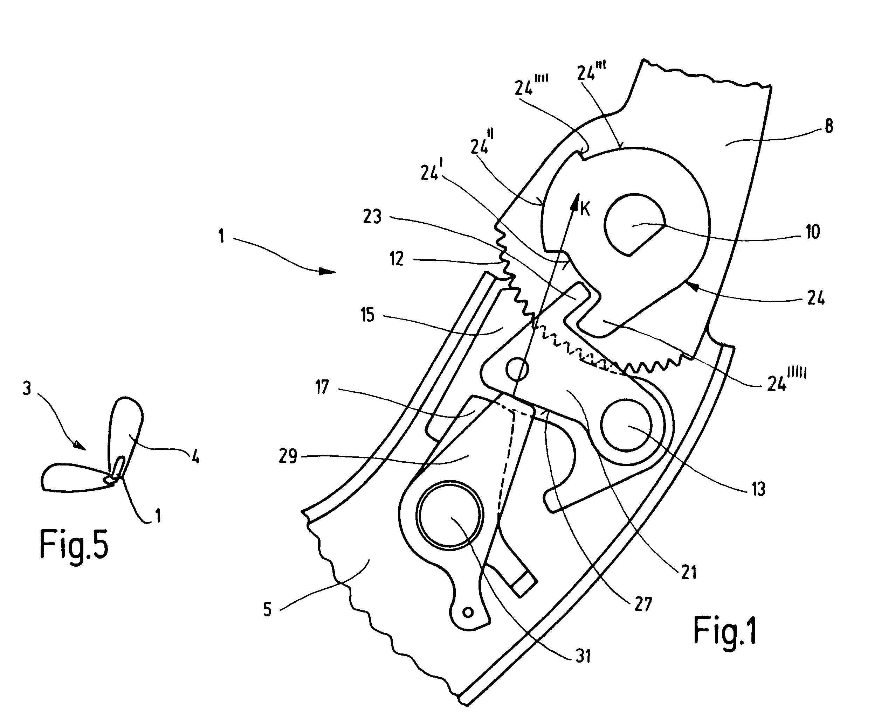

Im folgenden ist die Erfindung anhand eines in der Zeichnung dargestellten Ausführungsbeispiels näher erläutert. Es zeigen
- Fig. 1: eine nur teilweise dargestellte, seitliche Ansicht des Ausführungsbeispiels im verriegelten Zustand,

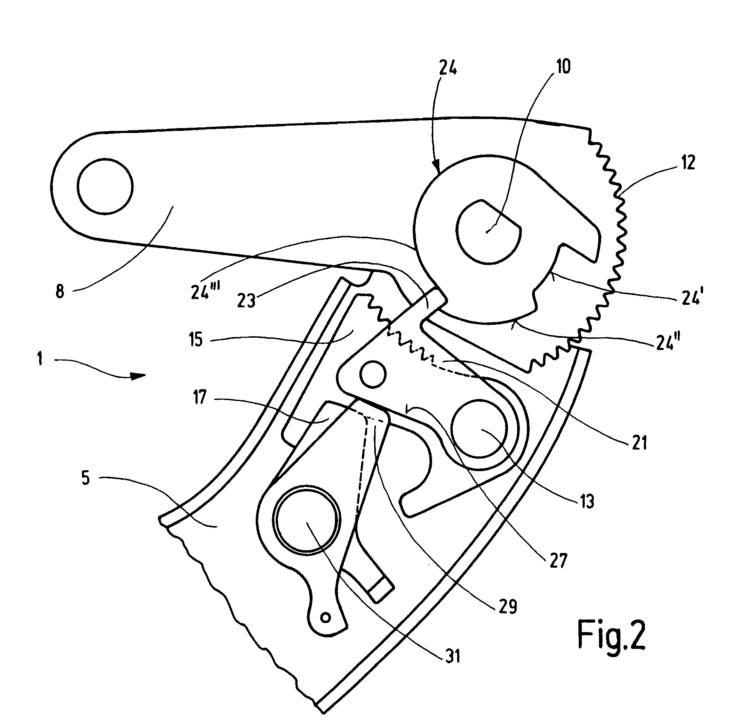

- Fig. 2: eine Fig. 1 entsprechende Darstellung des Ausführungsbeispiels im vorgeschwenkten Zustand,

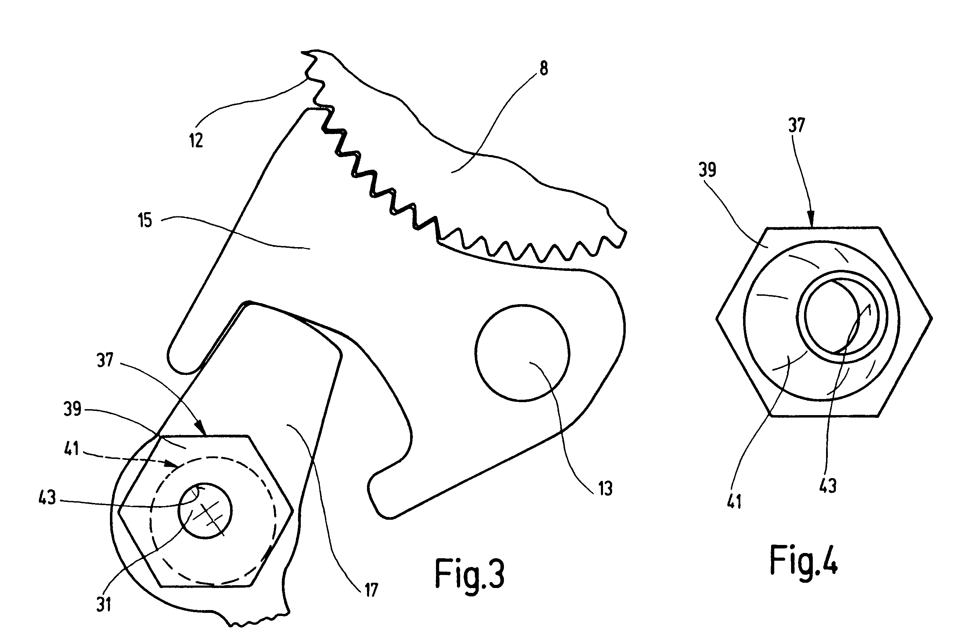

- Fig. 3: eine ausschnittsweise Darstellung der Sicherung der Sperrklinke,
- Fig. 4: eine perspektivische Ansicht der Lagerung des die Sperrklinke sichernden Stückes, und
- Fig. 5: eine schematische Seitenansicht eines Fahrzeugsitzes mit erfindungsgemäßem Gelenkbeschlag.

Das Ausführungsbeispiel betrifft einen Gelenkbeschlag 1 für eine Rücksitzbank 3 eines Kraftfahrzeuges, deren Anordnung in Kraftfahrzeug und dessen normale Fahrtrichtung die nachfolgenden Richtungsangaben definieren. Der Gelenkbeschlag 1 ist als Rastbeschlag ausgebildet. Auf beiden Seiten der Rücksitzbank 3, oder bei einer Ausbildung mit einer 1 /3 - 2/3 - Lehne auf beiden Seiten der entsprechenden Teile der Rückenlehne 4. ist je ein Gelenkbeschlag 1 vorgesehen, mittels dessen die Rückenlehne 4 mehrere verschiedene Lehnenstellungen für den Sitzgebrauch, im folgenden als Sitzstellungen bezeichnet, und eine Lehnenstellung für die Tischfunktion, im folgenden als Tischstellung bezeichnet, einnehmen kann. Jeder Gelenkbeschlag 1 weist ein Beschlagunterteil 5, welches fest an der Sitzteilstruktur der Rücksitzbank 3 angebracht ist, und ein Beschlagoberteil 8 auf, welches fest an der Struktur der Rückenlehne 4 befestigt ist. Das Beschlagoberteil 8 ist drehbar im Beschlagunterteil 5 gelagert mittels eines Lehnenbolzens 10 als Drehachse, wodurch die Rückenlehne 4 der Rücksitzbank 3 relativ zum Sitzteil der Rücksitzbank 3 verschwenkbar ist.

Das Beschlagoberteil 8 trägt an seinem unteren, von der Rückenlehne 4 abgewandten Ende konzentrisch zum Lehnenbolzen 10 einen Zahnkranz 12. Am Beschlagunterteil 5 ist auf einem unterteilfesten Klinkenbolzen 13 eine Sperrklinke 15 schwenkbar gelagert. Die Sperrklinke 15 weist eine Verzahnung auf, welche ungefähr auf den Lehnenbolzen 10 ausgerichtet ist und mit dem in der gleichen Ebene befindlichen Zahnkranz 12 zusammenwirken kann. Befindet sich die Rücksitzbank 3 in einer Sitzstellung, so liegt der Zahnkranz 12 im Schwenkbereich der Sperrklinke 15. Die federbelastete Sperrklinke 15 ist bei dieser Neigung der Rückenlehne 4 mit ihrer Verzahnung in den Zahnkranz 12 eingefallen und verriegelt dadurch den Gelenkbeschlag 1. Der Zahnkranz 12 erstreckt sich über einen so großen Winkelbereich, daß mehrere verriegelbare Sitzstellungen, also mehrere Neigungen der Rükkenlehne 4, möglich sind. Die Sperrklinke 15 wird durch ein schwenkbares Fangstück 17 für den Crashfall gesichert.

Auf dem Klinkenbolzen 13 eine Steuerklinke 21 gelagert, welche auf der vom Beschlagunterteil 5 abgewandten Seite parallel zur Schwenkebene der Sperrklinke 15 angeordnet und mit der Sperrklinke 15 drehfest verbunden ist. Die Steuerklinke 21 weist einen Steuerzahn 23 auf, welcher näher zum Lehnenbolzen 10 hin angeordnet ist als die Verzahnung der Sperrklinke 15. In der gleichen Ebene wie die Steuerklinke 21 weist das Beschlagoberteil 8 auf dem Lehnenbolzen 10 eine Steuerscheibe 24 auf, welche einen geringeren Radius als der Zahnkranz 12 aufweist. Die Steuerscheibe 24 ist beispielsweise durch Prägen einstückig mit dem Beschlagoberteil 8 ausgebildet oder je nach Anwendungsfall auf das Beschlagoberteil 8 aufgesetzt und mit diesem drehfest verbunden.

Die Steuerscheibe 24 weist als Steuerkurve für den Steuerzahn 23 in Umfangsrichtung nacheinander einen radial zurückgesetzten Einfallabschnitt 24', daran anschließend einen radial vorspringenden Halteabschnitt 24'' und daran wiederum anschließend einen radial zurückgesetzten Sicherungsabschnitt 24''' auf, wobei der Übergang vom Halteabschnitt 24'' zum Sicherungsabschnitt 24''' als ein stufenförmiger erster Anschlag 24'''' ausgebildet ist. Die den Einfallabschnitt 24' begrenzende Flanke, welche auf der vom Halteabschnitt 24'' abgewandten Seite angeordnet ist, ist als ein zweiter Anschlag 24''''' ausgebildet. Der Radius vom Lehnenbolzen 10 bis zur äußeren Kante des zweiten Anschlags 24''''' ist größer als der Radius vom Lehnenbolzen 10 bis zum Halteabschnitt 24''. Die vom Steuerzahn 23 in Umfangsrichtung abgewandte Flanke der Steuerklinke 21 ist im folgenden als Anlagefläche 27 bezeichnet. Zur Sicherung der Steuerklinke 21 - und damit auch der Sperrklinke 15 - ist ein federbelastetes Spannstück 29 vorgesehen, welches an der Anlagefläche 27 anliegt und welches auf dem gleichen Lagerbolzen 31 wie das Fangstück 17 relativ zu diesem drehbar gelagert ist.

Wenn in einer Sitzstellung die Sperrklinke 15 in den Zahnkranz 12 eingefallen ist, befindet sich der Steuerzahn 23 innerhalb des Einfallabschnittes 24', ohne jedoch in radialer Richtung an der Steuerscheibe 24 anzuliegen. Dieser Abstand zwischen Steuerzahn 23 und Steuerscheibe 24 ermöglicht das ungehinderte Einfallen der Sperrklinke 15. Die radialen Flanken des Einfallabschnittes 24' definieren die möglichen Neigungen der Rückenlehne 4, d.h. die möglichen Winkel des Beschlagoberteils 8 mit der Steuerscheibe 24 relativ zum Beschlagunterteil 5 mit der Steuerklinke 21. Der zweite Anschlag 24''''' gibt die maximal nach hinten mögliche Neigung der Rückenlehne 4 vor. Um die Rücksitzbank 3 in eine flache, sogenannte Tischstellung mit nahezu waagrecht angeordneter Rückenlehne 4 zu bringen, muß der Gelenkbeschlag 1 entriegelt und die Rückenlehne 4 vorgeschwenkt werden. Hierzu wird durch ein nicht dargestelltes Betätigungsseil das Fangstück 17 von der Sperrklinke 15 zurückgezogen, wobei das Fangstück 17 nach Überstreichen eines gewissen Winkels das Spannstück 29 mitnimmt. Ein an der Sperrklinke 15 entsprechend vorgesehener Vorsprung begrenzt als Endanschlag den möglichen Schwenkbereich des Fangstücks 17. Durch das Schwenken des Spannstücks 29 kommt die Sperrklinke 15 frei.

Durch das auf die Rückenlehne 4 der Rücksitzbank 3 ausgeübte Moment und aufgrund der außerhalb des Selbsthemmungsbereichs befindlichen Zahnflankenwinkel kann das Beschlagoberteil 8 über den Zahnkranz 12 die Sperrklinke 15 zurückdrücken, so daß der Gelenkbeschlag 1 entriegelt ist. Die Sperrklinke 15 kann auch durch weiteres Ziehen am Fangstück 17 mitgenommen werden und dadurch in Öffnungsrichtung schwenken. Mit dem Öffnen der Sperrklinke 15 wird zugleich der Steuerzahn 23 aus dem Einfallabschnitt 24' zurückgezogen und die Steuerklinke 21 von der Steuerscheibe 24 weggeschwenkt. Das rückenlehnenfeste Beschlagoberteil 8 kann nun vorgeschwenkt werden. Wird nun das Betätigungsseil am Fangstück 17 losgelassen, so kann das Spannstück 29 aufgrund der Federbelastung zurückschwenken, das Fangstück 17 mitnehmen, und die Steuerklinke 21 wieder zur Steuerscheibe 24 hinschwenken. Der Steuerzahn 23 gelangt nun in Anlage an den Halteabschnitt 24'', wodurch ein Einfallen der Sperrklinke 15 verhindert wird.

Bei Erreichen der Tischstellung gelangt der Steuerzahn 23 in den Sicherungsabschnitt 24''', wodurch die Steuerklinke 21 noch etwas auf die Steuerscheibe 24 zu schwenkt. Das Spannstück 29 gelangt dadurch in seine Endposition, in welcher es die Steuerklinke 21 sichert. Durch die Anlage an den ersten Anschlag 24'''' verhindert der Steuerzahn 23, daß das Beschlagoberteil 8 mit der Rückenlehne 4 aufgrund der Polsterpressung zwischen Rückenlehne 4 und Sitzteil zurückschwenkt. Die Rückenlehne 4 ist auf diese Weise in der Tischstellung gesichert. Zum Übergang zurück in eine Sitzstellung muß auf entsprechende Weise mittels des Fangstücks 17 das Spannstück 29 von der Steuerklinke 21 weggeschwenkt werden, wodurch diese außer Eingriff mit der Steuerscheibe 24 gelangt, so daß das Beschlagoberteil 8 zurückgeschwenkt werden kann. Sobald der Steuerzahn 23 den Halteabschnitt 24'' überquert hat und sich wieder im Einfallabschnitt 24' befindet, kann die Sperrklinke 15 wieder einfallen. Mittels seines größeren Radius verhindert der zweite Anschlag 24''''' zusammen mit dem Steuerzahn 23, daß die Rückenlehne 4, beispielsweise durch zuviel Schwung, zu weit nach hinten geschwenkt wird.

Im verriegelten Zustand des Gelenkbeschlags 1 liegt das Spannstück 29 an der Anlagefläche 27 der Steuerklinke 21 an. Die Senkrechte zur Anlagefläche 27 am Berührpunkt mit dem Spannstück 29 gibt die Kraftrichtung K derjenigen Kraft wieder, welche vom Spannstück 29 auf die Steuerklinke 21 und damit auf die Sperrklinke 15 übertragen wird. Bei bekannten Beschlägen weist diese Kraftrichtung K auf die Lagerstelle des Beschlagoberteils 8, d.h. auf den Lehnenbolzen 10, um die Verzahnung zwischen Sperrklinke 15 und Zahnkranz 12 spielfrei zu stellen. Um auch das fertigungstoleranzbedingte Spiel in den Lagerstellen des Beschlagoberteils 8 sowie der Sperrklinke 15 und der Steuerklinke 21 zu beseitigen, weist erfindungsgemäß die Senkrechte zur Anlagefläche 27 am Berührpunkt am Lehnenbolzen 10 vorbei, und zwar von der Verbindungslinie zwischen Lehnenbolzen 10 und Klinkenbolzen 13 weiter abgewandt als bei einer Ausrichtung auf die Lagerstelle des Beschlagoberteils 8. Während die Kraftkomponente in Richtung der Lagerstelle des Beschlagoberteils 8 weiterhin die Verzahnung spielfrei stellt, wird durch die andere Ausrichtung eine zusätzliche Kraftkomponente erzeugt, die radial auf die Lagerstelle des Beschlagoberteils 8 wirkt und diese spielfrei stellt. Entsprechend wird auch das Spiel in der Lagerstelle der beiden Klinke 15 und 21 beseitigt.

Das Fangstück 17 ist auf dem Lagerbolzen 31 mittels eines Exzenterstücks 37 gelagert. Das Exzenterstück 37 weist eine Profilplatte 39, deren siebeneckige Form aus einem regelmäßigen Sechseck durch "Abschneiden" einer Ecke abgeleitet ist. Auf der Profilplatte 39 weist das Exzenterstück 37 eine Lagerbuchse 41 auf, welche zur Lagerung des Fangstücks 17 dient. Das Exzenterstück 37 ist vorzugsweise einstükkig ausgebildet. Eine zentrale Bohrung 43 durchdringt die Profilplatte 39 und die Lagerbuchse 41, um den Lagerbolzen 31 aufzunehmen. Dabei fällt das Zentrum der Lagerbuchse 41 nicht mit dem Zentrum der zentralen Bohrung 43 zusammen, sondern ist versetzt dazu angeordnet, also exzentrisch. Der Exzenterhochpunkt, also diejenige Stelle in Umfangsrichtung des Exzenterstücks 37, welche am weitesten von der zentralen Bohrung 43 entfernt ist, ist auf der Profilplatte 39 dadurch markiert, daß er der "abgeschnittenen Ecke" gegenüberliegt. Das Exzenterstück 37 ist so eingebaut, daß die Profilplatte 39 auf der vom Beschlagunterteil 5 abgewandten Seite des Fangstücks 17 angeordnet ist.

Um den fertigungstoleranzbedingten Überdeckungsverlust in der Verzahnung, d.h. das nicht vollständige Eingreifen der Verzahnung der Sperrklinke 15 in die Verzahnung des Zahnkranzes 12 auszugleichen oder zu verringern, wird bei der Montage bei eingefallener Sperrklinke 15 das Exzenterstück 37 mittels der Profilplatte 39 gedreht. Das Exzenterstück 37, und mit ihm das Fangstück 17, vollführen dadurch eine exzentrische Bewegung. Das Exzenterstück 37 wird so lange gedreht, bis der Überdeckungsverlust minimal wird, und dann wieder etwas zurückgedreht.

Ein Gelenkbeschlag für einen Fahrzeugsitz mit einer Liegestellung weist beispielsweise eine ungefähr spiegelbildlich ausgebildete Steuerscheibe auf, bei der Einfallabschnitt, Halteabschnitt und Sicherungsabschnitt in umgekehrter Reihenfolge angeordnet sind und der Sicherungsabschnitt durch einen Absatz abgeschlossen wird, welcher in seiner radialen Abmessung dem bisherigen zweiten Absatz 24''''' entspricht. Soll der Fahrzeugsitz sowohl eine Tischstellung als auch eine Liegestellung aufweisen, ist die Steuerscheibe entsprechend mit zusätzlichen Abschnitten für die zu überstreichenden Winkelbereiche versehen. In einem solchen Fall könnte anstelle des zweiten Absatzes 24''''' ein Teilabsatz mit einem anschließenden, zweiten Halteabschnitt vorgesehen sein, welcher den gleichen Radius wie der bisherige Halteabschnitt 24'' aufweist. Am Ende des zweiten Halteabschnitts kann zur Begrenzung der maximal möglichen Neigung ein weiterer Absatz vorgesehen sein, welcher in seiner radialen Abmessung dem bisherigen zweiten Absatz 24''''' entspricht. In abgewandelter Weise ist noch eine Einstiegsstellung für eine freigeschwenkte Rückenlehne, vorzugsweise in einem zweitürigen Kraftfahrzeug, möglich. Hierfür ist beispielsweise im Bereich des Halteabschnitts 24'' eine einzelne Aufnahme für den Steuerzahn vorgesehen.

## Patentansprüche

1. Gelenkbeschlag für einen Fahrzeugsitz, insbesondere für eine Kraftfahrzeug-Rücksitzbank, mit einem Beschlagunterteil (5), einem relativ zum Beschlagunterteil (5) um eine Drehachse (10) verdrehbaren Beschlagoberteil (8) zur Befestigung der Rückenlehne (4) des Fahrzeugsitzes (3), einer Steuerkurve (24) an einem (8) der beiden Beschlagteile und einer Sperrklinke (15) und einem Steuerelement (23) am anderen Beschlagteil (5), wobei die Rückenlehne (4) mittels des Gelenkbeschlags (1) um die Drehachse schwenkbar ist zwischen wenigstens einer aufrechten Sitzstellung, welche verriegelbar ist, indem die Sperrklinke (15) das die Steuerkurve (24) aufweisende Beschlagteil (8) verriegelt, und einer flachen Tischstellung und/oder einer Liegestellung, welche mittels des Gelenkbeschlags (1) sicherbar ist, wobei die Steuerkurve (24) mit dem Steuerelement (23) zusammenwirkt, um die Verriegelung und/oder Sicherung durch den Gelenkbeschlag (1) zu steuern, **dadurch gekennzeichnet, daß** die Steuerkurve (24) einen Einfallabschnitt (24') entsprechend der verschiedenen möglichen Sitzstellungen der Rückenlehne (4) aufweist und als Steuerelement des anderen Beschlagteiles (5) ein an der Sperrklinke (15) angeordneter Steuerzahn (23) vorgesehen ist, welcher sich in den durch die Sperrklinke (15) verriegelten, verschiedenen möglichen Sitzstellungen innerhalb des Einfallabschnittes (24') befindet, ohne in radialer Richtung bezüglich der Drehachse des Beschlagoberteils (8) an der Steuerkurve (24) anzuliegen.

2. Gelenkbeschlag nach Anspruch 1, **dadurch gekennzeichnet, daß** die Steuerkurve (24) einen Sicherungsabschnitt (24''') entsprechend der möglichen Tischstellung oder Liegestellung der Rückenlehne (4) aufweist, wobei der Steuerzahn (23) bei Erreichen der Tischstellung oder Liegestellung in den Sicherungsabschnitt (24''') gelangt.

3. Gelenkbeschlag nach Anspruch 2, **dadurch gekennzeichnet, daß** in Umfangsrichtung zwischen dem Einfallabschnitt (24') und dem Sicherungsabschnitt (24''') ein Halteabschnitt (24'') vorgesehen ist, wobei bei Anlage des Steuerzahns (23) an den Halteabschnitt (24'') ein Einfallen der Sperrklinke (15) verhindert wird.

4. Gelenkbeschlag nach einem der Ansprüche 1 bis 3, **dadurch gekennzeichnet, daß** die Steuerkurve auf einer Steuerscheibe (24) vorgesehen ist, welche konzentrisch zur Drehachse des Beschlagoberteils (8) angeordnet ist.

5. Gelenkbeschlag nach einem der Ansprüche 1 bis 4, **dadurch gekennzeichnet, daß** der Steuerzahn (23) an einer gesonderten Steuerklinke (21) ausgebildet ist, welche mit der Sperrklinke (15) verbunden ist.

6. Gelenkbeschlag nach einem der Ansprüche 1 bis 5, **dadurch gekennzeichnet, daß** die Sperrklinke (15) mittels eines beweglich gelagerten und federbelasteten Spannstücks (29) gesichert und im Crashfall mittels eines beweglich gelagerten Fangstücks (17) in Eingriff mit einer Verzahnung (12) des zu verriegelnden Beschlagteiles (8) gehalten wird.

7. Gelenkbeschlag nach Anspruch 6, **dadurch gekennzeichnet, daß** die vom Spannstück (29) ausgeübte Kraft eine Richtung (K) aufweist, die an der Drehachse (10) des Beschlagoberteils (8) vorbei weist.

8. Gelenkbeschlag nach Anspruch 6 oder 7, **dadurch gekennzeichnet, daß** das Fangstück (17) exzentrisch gelagert ist.

9. Gelenkbeschlag nach Anspruch 8, **dadurch gekennzeichnet, daß** an der exzentrischen Lagerung (37) des Fangstücks (17) Drehhilfsmittel (39) vorgesehen sind, um die Ausrichtung der Exzentrizität relativ zur Sperrklinke (15) einzustellen.

10. Fahrzeugsitz, insbesondere Kraftfahrzeug-Rücksitzbank, mit einem Gelenkbeschlag (1) nach einem der Ansprüche 1 bis 9.

## Claims

1. Articulated fitting for a vehicle seat, in particular for a motor vehicle rear seat, having a lower fitting member (5), an upper fitting member (8) which can be rotated relative to the lower fitting member (5) about an axis of rotation (10) in order to fix the backrest (4) of the vehicle seat (3), a control cam (24) on one (8) of the two fitting members and a locking detent (15) and a control element (23) on the other fitting member (5), the backrest (4) being able to be pivoted about the axis of rotation by means of the articulated fitting (1) between at least an upright seat position, which can be locked by the locking detent (15) locking the fitting member (8) having the control cam (24), and a flat table-like position and/or a reclined position which can be secured by means of the articulated fitting (1), the control cam (24) co-operating with the control element (23) in order to control the locking and/or securing by means of the articulated fitting (1), **characterised in that** the control cam (24) has an engagement portion (24') corresponding to the various possible seat positions of the backrest (4) and a control tooth (23) which is arranged on the locking detent (15) is provided as a control element for the other fitting member (5) and is located within the engagement portion (24') in the various possible seat positions which are locked by means of the locking detent (15) without being in abutment against the control cam (24) in a radial direction relative to the axis of rotation of the upper fitting member (8).

2. Articulated fitting according to claim 1, **characterised in that** the control cam (24) has a securing portion (24''') corresponding to the possible table-like position or reclined position of the backrest (4), the control tooth (23) reaching the securing portion (24''') when the table-like position or the reclined position is reached.

3. Articulated fitting according to claim 2, **characterised in that** a retaining portion (24''') is provided in a peripheral direction between the engagement portion (24') and the securing portion (24'''), the locking detent (15) being prevented from coming into engagement when the control tooth (23) abuts the retaining portion (24'').

4. Articulated fitting according to any one of claims 1 to 3, **characterised in that** the control cam is provided on a control plate (24) which is arranged concentrically relative to the axis of rotation of the upper fitting member (8).

5. Articulated fitting according to any one of claims 1 to 4, **characterised in that** the control tooth (23) is constructed on a separate control detent (21) which is connected to the locking detent (15).

6. Articulated fitting according to any one of claims 1 to 5, **characterised in that** the locking detent (15) is secured by means of a movably supported and resiliently loaded clamping piece (29) and is kept in engagement with a tooth arrangement (12) of the fitting member (8) to be locked by means of a movably supported catch piece (17) in the event of a crash.

7. Articulated fitting according to claim 6, **characterised in that** the force applied by the clamping piece (29) has a direction (K) which extends beyond the axis of rotation (10) of the upper fitting member (8).

8. Articulated fitting according to claim 6 or 7, **characterised in that** the catch piece (17) is supported in an eccentric manner.

9. Articulated fitting according to claim 8, **characterised in that** means (39) for assisting rotation are provided on the eccentric bearing (37) of the catch piece (17) in order to adjust the orientation of the eccentricity relative to the locking detent (15).

10. Vehicle seat, in particular a motor vehicle rear seat, having an articulated fitting (1) according to any one of claims 1 to 9.

## Revendications

1. Ferrure d'articulation pour un siège de véhicule automobile, en particulier pour une banquette arrière de véhicule, comportant une partie inférieure de ferrure (5), une partie supérieure de ferrure (8) apte à tourner autour d'un axe de rotation (10) par rapport à la partie inférieure de ferrure (5) pour la fixation du dossier (4) du siège de véhicule (3), une came de commande (24) sur l'une (8) des deux parties de ferrure et un cliquet d'arrêt (15) et un élément de commande (23) sur l'autre partie de ferrure (5), à l'occasion de quoi le dossier (4) est apte à pivoter autour de l'axe de rotation au moyen de la ferrure d'articulation (1) entre au moins une position de siège droite, laquelle est verrouillable par le fait que le cliquet d'arrêt (15) verrouille la partie de ferrure (8) présentant la came de commande (24), et une position de tablette plate et/ou une position de couchette, laquelle est apte à être bloquée au moyen de la ferrure d'articulation (1), à l'occasion de quoi la came de commande (24) coopère avec l'élément de commande (23) pour commander le verrouillage et/ou le blocage par la ferrure d'articulation (1), **caractérisée par le fait que** la came de commande (4) présente une section d'enclenchement (24') correspondant aux différentes positions de siège possibles du dossier (4) et, comme élément de commande de l'autre partie de ferrure (5), est prévue une dent de commande (23) disposée sur le cliquet d'arrêt (15), laquelle se trouve à l'intérieur de la section d'enclenchement (24') dans les différentes positions de siège possibles, verrouillées par le cliquet d'arrêt (15), sans s'étendre en direction radiale par rapport à l'axe de rotation de la partie supérieure de ferrure (8) sur la came de commande (24).

2. Ferrure d'articulation selon la revendication 1, **caractérisée par le fait que** la came de commande (24) présente une section de blocage (24''') correspondant à la position de tablette ou à la position de couchette possible du dossier (4), à l'occasion de quoi la dent de commande (23) parvient lors de l'atteinte de la position de tablette ou de la position de couchette dans la section de blocage (24''').

3. Ferrure d'articulation selon la revendication 2, **caractérisée par le fait que**, dans la direction périphérique entre la section d'enclenchement (24') et la section de blocage (24'''), est prévue une section d'arrêt (24''), à l'occasion de quoi, lors de l'installation de la dent de commande (23) sur la section d'arrêt (24''), un enclenchement du cliquet d'arrêt (15) est empêché.

4. Ferrure d'articulation selon l'une des revendications 1 à 3, **caractérisée par le fait que** la came de commande est disposée sur un disque de commande (24), lequel est disposé de façon concentrique à l'axe de rotation de la partie supérieure de ferrure (8).

5. Ferrure d'articulation selon l'une des revendications 1 à 4, **caractérisée par le fait que** la dent de commande (23) est formée sur un cliquet de commande séparé (21), lequel est relié avec le cliquet d'arrêt (15).

6. Ferrure d'articulation selon l'une des revendications 1 à 5, **caractérisée par le fait que** le cliquet d'arrêt (15) est bloqué au moyen d'une pièce de serrage (29) montée de façon mobile et chargée par ressort et est maintenu en cas d'accident au moyen d'une pièce de sûreté (17) montée mobile en engrènement avec une denture (12) de la partie de ferrure (8) à verrouiller.

7. Ferrure d'articulation selon la revendication 6, **caractérisée par le fait que** la force exercée par la pièce de serrage (29) présente une direction (K) qui passe devant l'axe de rotation (10) de la partie supérieure de ferrure (8).

8. Ferrure d'articulation selon l'une des revendications 6 ou 7, **caractérisée par le fait que** la pièce de sûreté (17) est montée de façon excentrique.

9. Ferrure d'articulation selon la revendication 8, **caractérisée par le fait que** sur le palier excentrique (37) de la pièce de sûreté (17) sont prévus des moyens auxiliaires de rotation (39) pour ajuster l'orientation de l'excentricité par rapport au cliquet d'arrêt (15).

10. Siège de véhicule, en particulier banquette arrière de véhicule automobile, présentant une ferrure d'articulation (1) telle que définie à l'une des revendications 1 à 9.
